# EUROPÄISCHE PATENTSCHRIFT

(11) **EP 0 861 510 B1**
(45) Veröffentlichungstag und Bekanntmachung des Hinweises auf die Patenterteilung: **18.08.1999**
(21) Anmeldenummer: 96939011.1
(22) Anmeldetag: 12.11.1996
(51) Int. Cl.: H01R 39/38, H02K 5/14

(54) **BÜRSTENTRAGEPLATTE**
BRUSH HOLDER PLATE
PLAQUE PORTE-BALAI

(30) Priorität: 18.11.1995 DE 19543125
(43) Veröffentlichungstag der Anmeldung: 02.09.1998
(73) Patentinhaber: ITT Automotive Europe GmbH, 60488 Frankfurt (DE)
(72) Erfinder: BRUHN, Rainer, D-74379 Ingersheim (DE)
(74) Vertreter: Dreiss, Fuhlendorf, Steimle & Becker
(86) Internationale Anmeldenummer: EP9604943
(87) Internationale Veröffentlichungsnummer: WO9719502

(56) Entgegenhaltungen:
- DE-U- 9 401 343
- GB-A- 2 079 540
- US-A- 4 896 067

## Beschreibung

Die Erfindung bezieht sich auf eine Bürstentrageplatte. Diese sind mit Führungen versehen, in denen Bürsten geführt sind. Dabei kann es sich um Köcher handeln, die aus Blech gefaltet sind und auf die Oberseite der Bürstentrageplatte aufgesetzt werden. Es sind aber auch Bürstentrageplatten bekannt, bei denen die Führungen in der Platte selbst ausgebildet sind.

Um eine elektrische Verbindung der Bürsten zu Außenanschlüssen zu erzielen, sind die Bürstentrageplatten häufig auch mit Anschlußsteckern versehen (vgl. GB-A-2 079 540).

Die Erfindung beruht auf der Aufgabe, eine möglichst einfache Befestigung für derartige Stecker vorzusehen, die leicht zu montieren ist, und eine sichere elektrische Verbindung der Bürsten mit den Steckern garantiert.

Dazu schlägt die Erfindung vor, die Bürstentrageplatte gemäß dem Hauptanspruch auszubilden.

Durch Verquetschen der Hülsen, die auf der Oberseite der Bürstentrageplatte senkrecht hervorstehen, werden Kontaktstifte sicher an der Trageplatte gehalten. Außerdem ergibt sich die Möglichkeit, vor dem Quetschvorgang die Litzen, die mit dem Stecker verbunden werden sollen, von oben in die Hülsen einzuführen, so daß durch den Quetschvorgang zugleich eine elektrische Verbindung zwischen den Kontaktstiften und den Bürsten erzeugt wird.

Um die Kontaktstifte axial an der Bürstentrageplatte zu sichern, ist eine Verlängerung des Steckers, mit einem Widerhaken versehen, der über das obere Ende der Hülse greift. Gleichzeitig ist eine rückwärtige Anschlagkante vorgesehen, die sich an die Unterseite der Bürstentrageplatte liegt. Der Abstand von Anschlag zu Widerhaken entspricht in etwa der Längsausdehnung von Loch und Hülse, so daß der Stecker nach dem Zusammenquetschen der Hülse in beiden axialen Richtungen gesichert an der Bürstentrageplatte befestigt ist.

Da die Bürstentrageplatte, die allgemein aus Kunststoff hergestellt ist, auf ein Lagerschild aufgesetzt wird, der aus Stahl besteht und im allgemeinen elektrisch auf Grundpotential gelegt ist, besitzt der Stecker 20 in dem Bereich, der durch das Lagerschild geführt ist, eine Kunststoffmanschette. Diese kann gleichzeitig die Aufgabe übernehmen, als Gegenstück für den auf den Stecker aufzusetzenden Gegenstecker zu dienen.

Die Erfindung wird im folgenden anhand von fünf Figuren näher erläutert. Dabei zeigt die
- Fig. 1: eine Draufsicht und die
- Fig. 2: einen Querschnitt durch eine Bürstentrageplatte.
- Fig.3a-3c: zeigen eine Draufsicht, eine Seitenansicht und einen Querschnitt durch einen Kontaktstift.

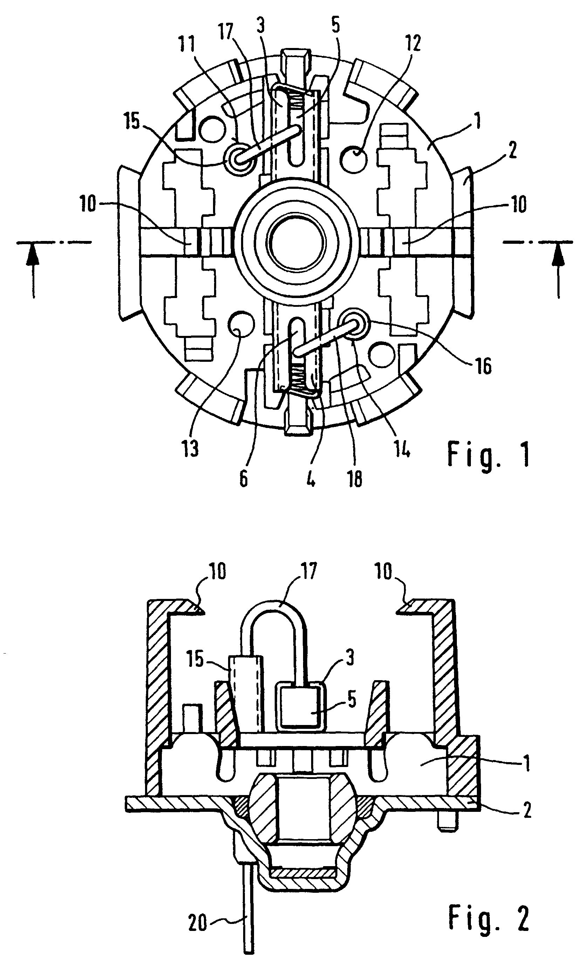

Die Fig. 1 zeigt eine Bürstentrageplatte 1 aus Kunststoff, die auf ein Lagerschild 2 aufgesetzt ist. Auf der dem Lagerschild 2 abgewandten Seite der Bürstentrageplatte 1 sind zwei Köcher 3,4 befestigt, in denen Bürsten 5 und 6 geführt sind. Die Köcher 3,4 sind zu einem zentralen Durchbruch in der Bürstentrageplatte 1 ausgerichtet, durch den die Motorachse mit einem Kollektor hindurchgeführt wird.

Die Bürsten 5 und 6 sind mit Litzen 17,18 versehen, die der Stromzuführung dienen.

Wie aus dem Querschnitt der Fig. 2 zu erkennen ist, ist die Bürstentrageplatte mit Befestigungshaken 10 versehen, die dazu dienen, elektrische Bauteile wie z. B. Entstörspulen auf der Bürstentrageplatte zu halten.

In der Bürstentrageplatte sind mehrere Löcher 11,12,13,14 vorgesehen, auf denen zum Teil Hülsen 15,16 aufgesteckt sind. Die Hülsen ragen, wie dies in Fig. 2 zu erkennen ist, aus der Ebene der Bürstentrageplatte senkrecht hervor.Die Hülsen werden durch sogenannte Rohrnieten realisiert.

Diese Hülse dienen u.a. als Verbindungspunkte, um die Litzen 17,18 der Kohlebürsten mit den Anschlußdrähten der weiteren elektronischen Bauelemente zu verbinden. Dazu werden die zu verbindenden Drähte bzw. Litzen an die Hülsen entweder angeschweißt oder in ihr eingesteckt, wobei durch Zusammendrücken und/oder Verschweißen der Hülse eine elektrische Verbindung erzielt wird.

Wie im folgenden erläutert werden soll, sollen die Hülsen gemäß der Erfindung auch dazu dienen, Verbindungen zu Kontaktstiften 20 herzustellen, mit denen der Motor von außen mit Strom versorgt wird. Dazu werden die Kontaktstifte 20, von denen einer in Fig. 2 dargestellt ist, über eine Teillänge in die Hülse eingeschoben. Danach wird durch Zusammendrücken der Hülse eine sichere Verbindung der Hülse 15 mit dem Kontaktstift 20 und gleichzeitig eine elektrische Verbindung zu einer Litze 7 einer Kohlebürste 5, hergestellt.

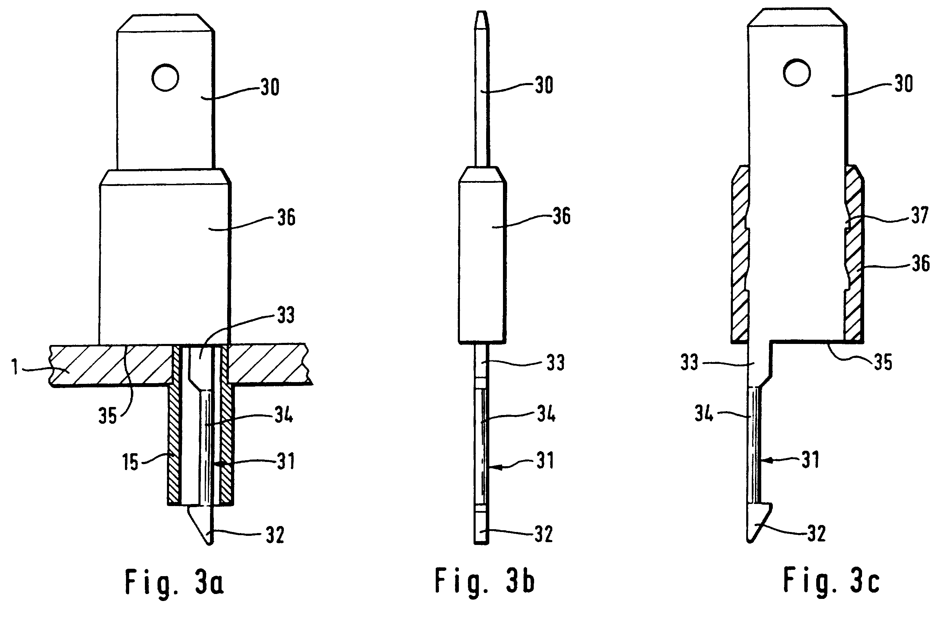

Ein geeigneter Kontaktstift ist in den Fig. 3a-3c dargestellt, wobei die Figur 3a eine Draufsicht, die Figur 3b eine Seitenansicht und die Figur 3c einen Querschnitt eines Kontaktstiftes 20 zeigen.

Der Kontaktstift 20 besteht aus einem Flachstecker 30, an dem in Verlängerung einer Längskante ein Verbindungsstück 31 ausgebildet ist. Das Verbindungsstück 31 mündet in einen Widerhaken 32 und weist einen im Anschluß an den Flachstekker 30 einen flachen Bereich 33 auf, der in einen runden Bereich 34 übergeht.

Der flache Bereich 33 entspricht in seiner Längsausdehnung in etwa der Dicke der Bürstentrageplatte 1, während der runde Bereich 34 in seiner Längsausdehnung in etwa der Höhe der Hülse entspricht, wie dies schematisch in der Figur 3a angedeutet ist.

Die rückwärtige Abschlußkante 35 des Flachsteckers 30 bildet einen Abschluß, der an die Unterseite der Bürstentrageplatte 1 zu liegen kommt, wenn der Kontaktstift 20 von unten in die Bürstentrageplatte eingeführt wird.

Der rückwärtige Bereich des Flachsteckers 30 ist mit einem Kunststoffmanschette 36 umgeben, wobei der nach vorn herausragende Bereich des Flachsteckers 30 als Kontaktgeber dient. Die Kunststoffmanschette 36 schließt rückwärtig mit der rückwärtigen Kante 35 des Flachsteckers 30 ab. Damit sich die Kunststoffmanschette 36 nicht auf den Flachstecker 30 verschiebt, sind an deren Seitenkante Nasen 37 vorgesehen. Dies ist deutlich in der Schnittdarstellung der Figur 3c zu erkennen.

Die Bürstentrageplatte 1 wird, wie in Fig. 2 zu erkennen ist, auf ein Lagerschild 2 aufgesetzt, wobei die Lagerplatte mit Durchbrüchen versehen ist, durch den die Kontaktstifte 20 zur Bürstentrageplatte 1 hindurchgeführt wird.

Die Durchbrüche haben eine Ausdehnung, die der Außenkontur der Kunststoffmanschette 36 entspricht.

Zur Montage wird zunächst der Kontaktstift 20 von unten durch eines der Löcher 11,12,13,14, die mit einer Hülse 15,16 versehen sind, hindurchgeführt, so daß die Abschlußkante 35 an der Unterseite der Bürstentrageplatte anliegt und das Verbindungsstück 31 insbesondere der runde Bereich 34 in der an dem jeweiligen Loch in der Bürstentrageplatte anschließenden Hülse 15 hineinragt. Dann wird von oben in die Hülse die Litze der anzuschließenden Bürste eingesteckt. Anschließend wird die Hülse zusammengequetscht, so daß eine elektrische Verbindung zwischen der Litze 17,18 und dem Flachstecker 30 entsteht. Der Widerhaken 32 ragt dabei über die Oberkante der zusammengequetschten Hülse hinaus und verhindert nun wirksam, daß der Steckerstift nach unten weggezogen werden kann. Der Stecker wird somit axial fixiert einerseits durch den Widerhaken, der über die Oberkante der Hülse greift, und andererseits durch die Abschlußkante 35, die an der Unterseite der Bürstentrageplatte anliegt.

Sodann wird die so vormontierte Einheit auf das Lagerschild aufgesetzt, wobei die Flachstecker 30 durch entsprechende Ausnehmungen im Schild hindurchgeführt werden.

## Patentansprüche

1. Bürstentrageplatte (1) mit Köchern (3,4) zum Führen von Kohlebürsten (5,6), die mit Litzen (17,18) versehen sind, mit elektrischen Kontaktstiften (20), die auf einer Seite der Bürstentrageplatte (1) hervorstehen, mit Löchern (11,12,13,14) und mit zusammenquetschbaren Hülsen (15,16), die in Verlängerung der Löcher (11,12,13,14) aus der Bürstentrageplatte (1) hervorstehen, dadurch **gekennzeichnet**, daß die Kontaktstifte (20) mit Verlängerungen (31) versehen sind, die durch die Löcher (11,12,13,14) und die Hülsen (15,16) hindurchgeführt sind, wobei durch Zusammenquetschen der Hülsen (14,15) eine Verbindung der Kontaktstifte (20) mit den Hülsen hervorgerufen wird.

2. Bürstentrageplatte nach Anspruch 1, dadurch **gekennzeichnet**, daß die Litzen (17,18) in die Hülsen (14,15) eingeführt sind und daß durch das Zusammenquetschen und/oder Verschweißen eine elektrisch leitende Verbindung zwischen dem Kontaktstift (20) und den Litzen (17,18) hergestellt ist.

3. Bürstentrageplatte nach Anspruch 1, dadurch **gekennzeichnet**, daß die Verlängerung (31) mit einem Widerhaken (32) versehen ist, der über das Ende der zusammengequetschten Hülse (14,15) greift, so daß auf diese Weise eine axiale Sicherung der Kontaktstifte (20) gegeben ist.

4. Bürstentrageplatte nach Anspruch 1 oder 3, dadurch **gekennzeichnet**, daß die Kontaktstifte (20) einen flachen Bereich (30) aufweisen, der in einer rückwärtigen Kante (35) endet, die zur Anlage an die Unterseite der Bürstentrageplatte (1) gelangt.

5. Bürstentrageplatte nach einem der vorhergehenden Ansprüche, dadurch **gekennzeichnet**, daß der Kontaktstift (20) aus einem Flachstecker (30) besteht, wobei in der Verlängerung einer Kante des Flachsteckers (30) ein Verbindungsstück (31) ausgebildet ist.

6. Bürstentrageplatte nach Anspruch 5, dadurch **gekennzeichnet**, daß das Verbindungsstück (31) einen runden Abschnitt (34) aufweist.

7. Bürstentrageplatte nach Anspruch 5, dadurch **gekennzeichnet**, daß der Flachstecker (30) in seinem rückwärtigen Bereich mit einer Kunststoffmanschette (36) versehen ist, die mit der rückwärtigen Kante (35) abschließt.

8. Bürstentrageplatte nach Anspruch 1, dadurch **gekennzeichnet**, daß diese auf ein Lagerschild (2) aufgesetzt ist, wobei in dem Lagerschild Durchbrüche für die Kontaktstifte (20) vorgesehen sind.

## Claims

1. Brush holder plate (1) which includes casings (3, 4) to guide carbon brushes (5, 6) having strands (17, 18), and electric contact pins (20) which project from one side of the brush holder plate (1) having holes (11, 12, 13, 14) and sleeves (15, 16) adapted to be pinched and projecting from the holes (11, 12, 13, 14) in the brush holder plate (1), chracterized in that the contact pins (20) have extensions (31) which are passed through the holes (11, 12, 13, 14) and the sleeves (15, 16), and a connection between the contact pins (20) and the sleeves is produced by pinching the sleeves (14, 15).

2. Brush holder plate as claimed in claim 1, characterized in that the strands (17, 18) are inserted into the sleeves (14, 15), and in that an electrically conductive connection between the contact pin (20) and the strands (17, 18) is produced by pinching and/or welding.

3. Brush holder plate as claimed in claim 1, characterized in that the extension (31) includes a barb (32) extending over the end of the pinched sleeve (14, 15) so that the contact pins (20) are secured axially in position this way.

4. Brush holder plate as claimed in claim 1 or claim 3, characterized in that the contact pins (20) have a blade terminal (30) ending in a rearward rim (35) which moves into abutment with the bottom side of the brush holder plate (1).

5. Brush holder plate as claimed in any one of the preceding claims, characterized in that the contact pins (20) includes a blade terminal (30), and a connecting piece (31) is provided in the extension of an edge of the blade terminal (30).

6. Brush holder plate as claimed in claim 5, characterized in that the connecting piece (31) includes a round portion (34).

7. Brush holder plate as claimed in claim 5, characterized in that the blade terminal (30) in its rearward area has a plastic cup seal (36) which ends flush with the rearward rim (35).

8. Brush holder plate as claimed in claim 1, characterized in that the brush holder plate is mounted on a bearing plate (2), and apertures for the contact pins (20) are provided in the bearing plate.

## Revendications

1. Plaque porte-balais (1), comprenant des fourreaux (3, 4) pour guider des balais de charbon (5, 6) qui sont pourvus de fils toronnés (17, 18), des broches de contact électrique (20) qui dépassent sur un côté de la plaque porte-balais (1), des trous (11, 12, 13, 14) et des douilles écrasables (15, 16) qui dépassent de la plaque porte-balais (1) dans le prolongement des trous (11, 12, 13, 14), **caractérisée** en ce que les broches de contact (20) sont pourvues de prolongements (31) qui sont passés à travers les trous (11, 12, 13, 14) et les douilles (15, 16), l'écrasement des douilles (15, 16) produisant une liaison des broches de contact (20) avec les douilles.

2. Plaque porte-balais selon la revendication 1, **caractérisée** en ce que les fils toronnés (17, 18) sont introduits dans les douilles (15, 16) et en ce que, par l'écrasement et/ou par soudage, on réalise une liaison électriquement conductrice entre la broche de contact (20) et les fils toronnés (17, 18).

3. Plaque porte-balais selon la revendication 1, **caractérisée** en ce que le prolongement (31) est pourvu d'une barbe (32) qui s'engage sur l'extrémité de la douille écrasée (15, 16), assurant ainsi un assujettissement axial des broches de contact (20).

4. Plaque porte-balais selon la revendication 1 ou 3, **caractérisée** en ce que les broches de contact (20) possèdent une région plate (30) qui se termine par un bord arrière (35) qui vient s'appliquer contre le dessous de la plaque porte-balais (1).

5. Plaque porte-balais selon l'une quelconque des revendications précédentes, **caractérisée** en ce que la broche de contact (20) consiste en une fiche plate (30), un élément de liaison (31) étant configuré dans le prolongement d'un bord de la fiche plate (30).

6. Plaque porte-balais selon la revendication 5, **caractérisée** en ce que l'élément de liaison (31) possède une partie ronde (34).

7. Plaque porte-balais selon la revendication 5, **caractérisée** en ce que la fiche plate (30) est pourvue, dans sa région arrière, d'un manchon (36) en matière plastique qui se termine sur le bord arrière (35).

8. Plaque porte-balais selon la revendication 1, **caractérisée** en ce que cette plaque est montée sur un flasque (2), des percements pour les broches de contact (20) étant prévus dans le flasque.
